# EUROPÄISCHE PATENTSCHRIFT

(11) **EP 2 959 161 B1**
(45) Veröffentlichungstag und Bekanntmachung des Hinweises auf die Patenterteilung: **17.04.2019**
(21) Anmeldenummer: 14705281.5
(22) Anmeldetag: 12.02.2014
(51) Int. Cl.: F03D 1/06

(54) **ROTORBLATT EINER WINDENERGIEANLAGE**
ROTOR BLADE OF A WIND TURBINE
PALE DE ROTOR D'UNE ÉOLIENNE

(30) Priorität: 19.02.2013 DE 102013202666
(43) Veröffentlichungstag der Anmeldung: 30.12.2015
(73) Patentinhaber: Senvion GmbH, 22297 Hamburg (DE)
(72) Erfinder: PETSCHE, Marc, 24809 Nübbel (DE); KORJAHN, Christoph Matthias, 24358 Ahlefeld-Bistensee (DE)
(74) Vertreter: Wallinger Ricker Schlotter Tostmann
(86) Internationale Anmeldenummer: PCT/EP2014/000381
(87) Internationale Veröffentlichungsnummer: WO 2014/127896

(56) Entgegenhaltungen:
- EP-B1- 1 944 505
- WO-A1-90/11929
- DE-A1-102008 003 411
- DE-A1-102008 052 858
- US-A1- 2011 142 664

## Beschreibung

Die Erfindung betrifft ein Rotorblatt einer Windenergieanlage mit einem Profil, das eine Saugseite und eine Druckseite aufweist, wobei das Profil eine Skelettlinie und eine Sehne zwischen der Vorderkante und der Hinterkante des Profils umfasst, wobei die Skelettlinie wenigstens abschnittsweise unterhalb der Sehne in Richtung der Druckseite verläuft und wobei das Profil eine relative Profildicke von mehr als 45 % aufweist.

Aus DE 10 2008 003 411 A1 ist ein Profil eines Rotorblatts einer Windenergieanlage sowie eine entsprechende Familie bzw. eine Mehrzahl von Profilen bekannt. Die in dieser Schrift offenbarten Flügelprofile bzw. Profile weisen eine stumpfe Hinterkante auf, eine im Wesentlichen ovale Saugseite und eine im Wesentlichen S-förmige Druckseite.

Es sind auch weitere Profile bekannt. Insbesondere sind auch Niedriggeschwindigkeitsprofile bekannt, die in der Nähe der Rotorblattwurzel bzw. in der Nähe der Nabe der Windenergieanlage verwendet werden.

Aus Dieter Althaus "Niedriggeschwindigkeitsprofile", Friedr. Vieweg & Sohn Verlagsgesellschaft mbH, Braunschweig/Wiesbaden, 1996, ist ein bekanntes Profil mit hoher relativer Dicke dadurch hergestellt, dass ein an sich bekanntes Profil mit niedriger relativer Dicke durch Abschneiden der Hinterkante oder Hochskalieren in der Dicke auf die erforderlichen relativen Dickenwerte, die in der Nähe der Blattwurzel benötigt werden, gebracht wird. Als Beispiel kann hierzu das FX 77-W-500 genannt werden, das auf den Seiten 162 bis 163 in diesem genannten Buch offenbart ist. Dieses Profil erreicht bei einer Reynoldszahl von 2,75 Mio. im sauberen Zustand einen maximalen Auftriebsbeiwert von cₐ = 1,6 bei einem Anstellwinkel von 10° und im verschmutzten, also turbulenten Zustand ein maximales cₐ von 0,8 bei einem Anstellwinkel von 4°. Das FX 77-W-500 hat eine relative Profildicke von 50 %.

Unter Anstellwinkel bzw. Anströmwinkel wird im Rahmen der Erfindung ein Winkel des anströmenden scheinbaren Windes zu der Sehne des Profils verstanden. Für etwaige Definitionen wird insbesondere auf das Lehrbuch Erich Hau "Windkraftanlagen", 4. Auflage, 2008, insbesondere Seite 126 f., verwiesen.

Bekannte Profile mit hoher relativer Profildicke, wie beispielsweise das FX 77-W-500, besitzen zwar im sauberen Zustand einen akzeptablen Auftriebsbeiwert cₐ, der maximale Auftriebsbeiwert bricht aber bei turbulenter Umströmung, also im verschmutzten Zustand, deutlich ein. Auch ändert sich der aerodynamische Anstellwinkel, bei dem der maximale Auftriebsbeiwert im verschmutzten Zustand erreicht wird, gegenüber dem Anstellwinkel, bei dem der maximale Auftriebsbeiwert im sauberen Zustand erreicht wird, deutlich. Dieses Verhalten, nämlich der kleine Auftrieb bei Verschmutzung mit einer großen Anstellwinkeländerung für den maximalen Auftriebsbeiwert ist für Windkraftanlagen sehr ungünstig. Wird als Auslegungsanstellwinkel, also der Anstellwinkel, der in der Auslegung des Rotorblattes bei der Berechnung des jeweiligen Profils verwendet wird, der Winkel oder ein etwas kleinerer Winkel gewählt, bei dem das saubere Profil den maximalen Auftriebsbeiwert besitzt, was sinnvoll ist, da die Blatttiefen klein gehalten werden sollen, verringert sich der Auftriebsbeiwert dann im verschmutzten Zustand auf einen Bruchteil des sauberen Wertes. Das Profil des FX 83-W-500 hat durch die dicke Hinterkante schon bei laminarer Umströmung nur mäßige aerodynamische Eigenschaften. Bei turbulenter Umströmung weist es noch hohe Auftriebsbeiwerte auf, hat dann aber relativ schlechte Gleitzahlen. Außerdem ist die maximale Dicke dieses Profils bei ungefähr 80 % der Profillänge bzw. Sehnenlänge, was strukturell für einen guten Straak des Rotorblatts weniger förderlich ist. Damit kann nur ein relativ geringer Abstand der Hauptgurte bei einem Blatt mit dem Profil des FX 83-W-500 hergestellt werden, was entsprechende Abstriche bei der Baubarkeit und dem Blattgewicht eines Rotorblatts hervorruft.

EP 1 944 505 B1 offenbart ein Windturbinenrotorblatt mit einem Profil, das eine Saugseite und eine Druckseite aufweist, wobei das Profil einen inneren Profilabschnitt und einen äußeren Profilabschnitt umfasst, wobei der innere Profilabschnitt vergleichsweise dicker als der äußere Profilabschnitt ist, wobei die Dicke des inneren Profilabschnitts zwischen 30 % und 80 % der Sehnenlänge des inneren Profilabschnitts beträgt und der innere Profilabschnitt mit Wirbelerzeugern versehen ist, wobei die Wirbelerzeuger auf der Saugseite des inneren Profilabschnitts zwischen 8 % und 12 % der Sehnenlänge angeordnet sind, von der Vorderkante des Profilabschnitts aus gemessen. Hierdurch soll erreicht werden, dass eine ausreichende aerodynamische Leistung gegeben ist, wobei gleichzeitig eine hohe Tragfähigkeit gegeben sein soll.

DE 10 2008 052 858 A1 der Anmelderin offenbart bestimmte Profile eines Rotorblatts und ein entsprechendes Rotorblatt einer Windenergieanlage, bei der die Profile für sehr gute aerodynamische Eigenschaften sorgen. Insbesondere sind die Profile relativ dick und weisen einen hohen Auftriebsbeiwert auf. Um für Rotorblätter von Windenergieanlagen noch höhere Auftriebsbeiwerte zu erzielen, könnte unter Umständen eine Maßnahme ergriffen werden, die bei Flügeln von Flugzeugen Verwendung findet. So sind beispielsweise sehr hohe Auftriebsbeiwerte aus der Veröffentlichung "Fluiddynamic lift", Information on Lift and its Derivatives, in Air and in Water, presented by Dr.-Ing. S. F. Hoerner 1985, S. 5-12 und 5-13 als auch 6-2 und 6-3, Hoerner Fluid Dynamics, Bakersfield, CA 93390 bekannt. Hierbei wird durch Vorsehen von sich dem Tragflügel anschließenden Klappen, insbesondere Spaltklappen, und dem Tragflügel vorstehenden Klappen, insbesondere Spaltklappen, die jeweils beabstandet zu dem eigentlichen Tragflügel sind, hohe Auftriebsbeiwerte von bis zu über 3,0 erreicht.

US 2011/0142664 A1 offenbart Rotorblätter von Windenergieanlagen mit entsprechenden Vortexgeneratoren.

Es ist Aufgabe der vorliegenden Erfindung, ein Rotorblatt einer Windenergieanlage anzugeben, das bei guten aerodynamischen Eigenschaften einen sehr hohen Auftrieb aufweist.

Gelöst wird diese Aufgabe durch ein Rotorblatt einer Windenergieanlage mit einem Profil, das eine Saugseite und eine Druckseite aufweist, wobei das Profil eine Skelettlinie und eine Sehne zwischen der Vorderkante und der Hinterkante des Profils umfasst, wobei das Profil eine relative Profildicke von mehr als 45 % aufweist, wobei auf der Saugseite des Rotorblatts im Bereich des Profils wenigstens ein Vortexgenerator angeordnet ist, wobei das Profil mit einer stumpfen Hinterkante versehen ist, wobei die Hinterkantendicke zwischen 15 % und 70 % der Sehnenlänge ist.

Durch Vorsehen eines erfindungsgemäßen Rotorblatts, das ein von der Aerodynamik her optimiertes Profil mit entsprechend guten aerodynamischen Eigenschaften, insbesondere einen hohen Auftriebsbeiwert hat, wurden bei zusätzlicher Verwendung wenigstens eines Vortexgenerators, der insbesondere auch als Wirbelerzeuger bezeichnet werden kann, überraschenderweise, ohne die o.g. aus dem Flugzeugbau bekannte Technik (Spaltklappen) zu verwenden, extrem hohe Auftriebsbeiwerte von über 3,0 bei entsprechenden großen Anstellwinkeln erreicht. Überraschenderweise verbessert sich auch die Gleitzahl trotz des durch die Vortexgeneratoren erzielten höheren Widerstands. Beispielsweise erhöht sich die Gleitzahl um bis zu 100 %.

Vorzugsweise verläuft die Skelettlinie wenigstens abschnittsweise unterhalb der Sehne in Richtung der Druckseite. Vorzugsweise hat das Profil eine relative Profildicke von mehr als 49 %.

Durch das erfindungsgemäße Rotorblatt kann ein sehr verschmutzungsunempfindliches Rotorblatt ausgebildet werden, das durch Ermöglichung größerer möglicher aerodynamischer Anstellwinkel einen fertigungstechnisch ungünstigen Twist des Rotorblattes an der Rotorblattwurzel reduziert, wodurch wieder eine bessere Strukturkompatibilität durch Vorsehen eines weniger stark getwisteten Gurtes des Rotorblatts ermöglicht wird.

Insbesondere ist es durch die Erfindung möglich, bei noch guten Gleitzahlen des Rotorblattes bzw. der entsprechenden Rotorblattabschnitte mit großer Dicke den Auftrieb des Rotorblattes in diesem Abschnitt deutlich zu vergrößern.

Durch Einsatz der entsprechenden Profile mit Vortexgeneratoren bei entsprechenden erfindungsgemäßen Rotorblättern kann das Gewicht und damit das statische Moment des Rotorblattes gegenüber konventionellen Entwürfen erheblich gesenkt werden. Da das statische Moment bei Rotorblättern von mehr als 50 m die wesentliche für die Auslegung begrenzende Variable ist, kann mit Hilfe der Erfindung unter Beibehaltung eines hohen Rotorwirkungsgrades der maximal mögliche Rotordurchmesser für ein gegebenes statisches Moment gesteigert werden. Dies führt zu einer deutlichen Ertragssteigerung bei entsprechend gegebenen und dimensionierten Blattanschlusskonstruktionen. Hierbei werden insbesondere keine Mehrfach-Spaltklappen wie beispielsweise Fowler-Klappen, die in der Flugzeugtechnik bekannt sind, verwendet.

Vorzugsweise ist der Vortexgenerator bzw. der wenigstens eine Vortexgenerator vor bzw. unmittelbar im Ablösepunkt der Luftströmung bei einem vorgegebenen Anstellwinkel angeordnet. Bei dem wenigstens einen Vortexgenerator handelt es sich vorzugsweise um eine Art Flügel oder ein Flügelpaar, das im Wesentlichen orthogonal aus der Oberfläche des Rotorblattes herausragt und in der Luftströmung einen Wirbel erzeugt. Hierdurch wird die Grenzschicht an der Oberfläche des Rotorblattes durchmischt, wodurch ein höherer Auftrieb erzeugt wird.

Bei der Grenzschicht handelt es sich vorzugsweise um eine Luftschicht um das Rotorblatt oder an dem Rotorblatt, die durch die Reibung der Luft an dem Rotorblatt beeinflusst wird, d.h. langsamer als die Umgebungsluftgeschwindigkeit ist. Durch die oder den von dem wenigstens einen Vortexgenerator erzeugten Wirbel wird energiereiche Strömung, d.h. Strömung mit hoher Geschwindigkeit von außen, in den durch die Reibung an der Wand des Rotorblatts abgebremsten Bereich der Strömung transportiert, wodurch die Grenzschicht durchmischt wird. Dadurch bleibt die Grenzschicht länger stabil und die Strömungsablösung verschiebt sich in Richtung Hinterkante des Rotorblatts oder zu größeren Anstellwinkeln. Hierdurch wird eine verbesserte Umströmung des Rotorblatts erzielt. Vorzugsweise ist die Position des wenigstens einen Vortexgenerators kurz vor der Position oder in der Position der Ablösung eines entsprechenden Profils ohne Vortexgenerator bei dem gewünschten Anstellwinkel.

Vorzugsweise ist ein Profil mit einer stumpfen Hinterkante vorgesehen, wobei die Hinterkantendicke zwischen 15 % und 70 % der Sehnenlänge ist. Hierdurch ist ein besonders hoher Auftriebsbeiwert zu erzielen. Insbesondere erhöhen sich auch die Gleitzahlen der Profile durch Vorsehen von Vortexgeneratoren. Beispielsweise bei einem Profil mit einer Dickenrücklage von 50 % führt das Vorsehen von Vortexgeneratoren dazu, dass die Gleitzahl sich von 17 auf 32 erhöht. Dieses entspricht einer Erhöhung von 88 %. Bei einem Profil mit einer Dicke von 70 % erhöht sich durch Vorsehen von Vortexgeneratoren die Gleitzahl von 7 auf 10, was einer Erhöhung von 43 % entspricht.

Erfindungsgemäß ist der wenigstens eine Vortexgenerator in einem Bereich von 20 % bis 28 %, der Profiltiefe des Profils bzw. der Sehnenlänge angeordnet. Diese Bereichsangaben verstehen sich gemessen von der Rotorblattvorderkante. Hierdurch kann ein besonders hoher Auftrieb erzielt werden.

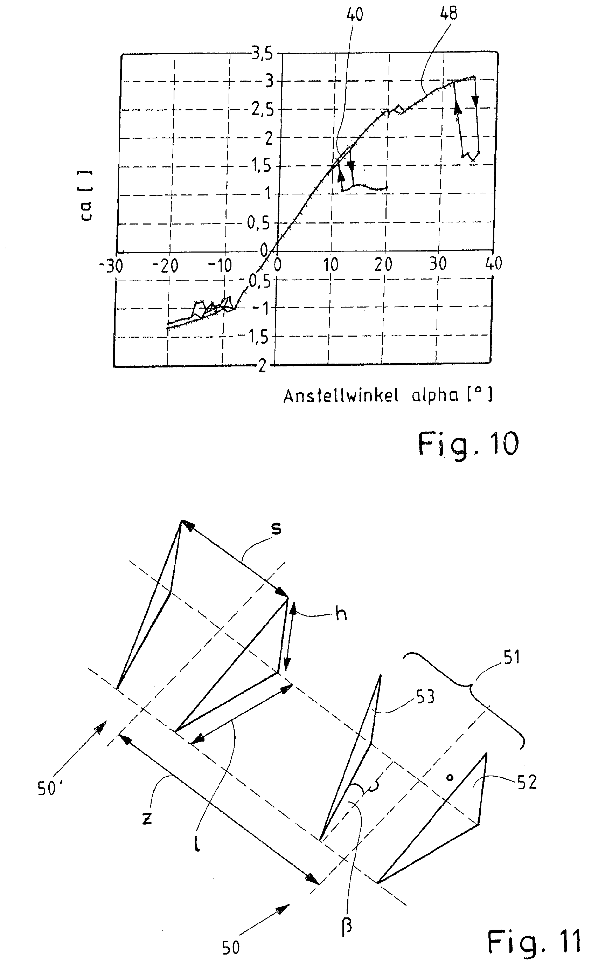

Wenn vorzugsweise der wenigstens eine Vortexgenerator ein Flügelpaar umfasst, wobei insbesondere die Flügel des Flügelpaars in einem Winkel zueinander angeordnet sind, der in einem Bereich von 10° bis 50°, insbesondere 20° bis 40°, insbesondere bei 30°, liegt, werden Luftwirbel erzeugt, die gegenläufig zueinander sind, was zu einer energiereichen Grenzschicht führt und damit eine auch bei hohen Anstellwinkeln lang anliegende Strömung ermöglicht. Der Winkel ist hierbei insbesondere ein Winkel in einer zur Rotorblattoberfläche parallelen Ebene. Hierbei ist insbesondere der Winkel gemeint, der zwischen den beiden Flächen der jeweiligen Flügel des Flügelpaars des Vortexgenerators liegt. Es handelt sich somit beispielsweise um den doppelten Winkel β gemäß der Fig. 11, die im Folgenden noch beschrieben wird.

Vorzugsweise ist der wenigstens eine Vortexgenerator im nabennahen Bereich des Rotorblatts angeordnet.

Vorzugsweise hat der Vortexgenerator höchstens eine Höhe, die der Höhe einer sich im Betrieb des Rotorblatts ausbildenden Luftgrenzschicht auf der Saugseite des Rotorblatts entspricht, wobei die Luftgrenzschicht dadurch definiert ist, dass die Luftgeschwindigkeit in der Luftgrenzschicht durch Reibung an der Rotorblattfläche der Saugseite um wenigstens 1 % reduziert ist.

Vorzugsweise sind mehrere Vortexgeneratoren vorgesehen, die linear nebeneinander im Wesentlichen parallel zu einer Längsachse des Rotorblattes angeordnet sind. Hierbei bedeutet nebeneinander in Anströmrichtung nebeneinander. Durch diese Ausgestaltung erhält das Rotorblatt insbesondere bei den entsprechend dicken Profilen (45 % und mehr von der Sehnenlänge) einen sehr hohen Auftriebsbeiwert. Die Vortexgeneratoren können auch noch weiter zur Rotorblattspitze angeordnet sein, insbesondere auch bei Profilen des Rotorblatts, die eine geringere relative Dicke als 45 % haben. Vorzugsweise sind die mehreren Vortexgeneratoren, insbesondere alle Vortexgeneratoren, bei einer relativen Profiltiefe von 20 % bis 40 % von der Vorderkante aus gesehen angeordnet.

Durch die erfindungsgemäße Maßnahme kann bei dem erfindungsgemäßen Rotorblatt ein hoher Anstellwinkel gewählt werden, wobei ein hoher Auftriebsbeiwert und eine hohe Gleitzahl erreicht werden kann. Hierdurch kann die Verwindung eines mit einem derartigen Profil versehenen Rotorblattes bzw. einer Familie oder einer Mehrzahl von Profilen versehenen Rotorblattes klein gehalten werden, so dass ein möglichst großer Abstand der Hauptgurte ohne eine Verdrehung der Hauptgurte erreicht werden kann und damit das Rotorblattgewicht reduziert wird.

Vorzugsweise ist die Skelettlinie in einem Abstand zwischen 0 % bis 60 %, insbesondere 0 % bis 50 %, der Profiltiefe des Profils unterhalb der Sehne angeordnet. Hierdurch ist ein Profil mit sehr guten aerodynamischen Eigenschaften für eine Windenergieanlage möglich.

Wenn vorzugsweise die Skelettlinie vollständig in einem Abschnitt zwischen 5 % bis 50 %, insbesondere 2 % bis 60 %, unterhalb der Sehne angeordnet ist, ist die Auslegung des Profils auch zu niedrigeren Reynoldszahlen relativ unproblematisch.

Vorzugsweise ist der Betrag der maximalen Wölbung kleiner als 0,015 bzw. 1,5 %. Die Wölbung ist hierbei der Abstand der Skelettlinie zur Sehne in Prozent der Sehnenlänge. Die maximale Wölbung ist somit für das gegebene Profil der größte Abstand der Skelettlinie zur Sehne in Prozent der Sehnenlänge. Die Skelettlinie ist im Rahmen der Erfindung die Linie der Mittelpunkte der zwischen der Profilober- und -unterseite eingeschriebenen Kreise. Die Sehne ist im Rahmen der Erfindung definiert als die Linie von der Mitte der Hinterkante des Profils zum weitest entfernten Profilpunkt, was dem Nasenpunkt entspricht. Die Skelettlinienkrümmung ist im Rahmen der Erfindung definiert als die zweite Ableitung der Funktion der Skelettlinie. Die maximale Profildicke bzw. im Rahmen der Erfindung auch relative Profildicke genannt, ist die maximale Dicke eines Profils senkrecht zur Sehne bezogen auf die Sehnenlänge. Die relative Dickenrücklage ist im Rahmen der Erfindung definiert als Abstand der maximalen Profildicke von dem vorderen Nasenpunkt bezogen auf die Sehnenlänge, also auch in Prozent angegeben. Die Hinterkantendicke ist im Rahmen der Erfindung definiert als Dicke der Hinterkante bezogen auf die Sehnenlänge.

Vorzugsweise ist die zweite Ableitung der Skelettlinie (Skelettlinienkrümmung) von 10 % bis 40 %, insbesondere von 5 % bis 50 %, insbesondere von 2 % bis 60 %, der Profiltiefe entweder 0 oder positiv. Dieses Profil hat auch eigenen erfinderischen Gehalt.

Besonders gute aerodynamische Eigenschaften hat ein Profil eines erfindungsgemäßen Rotorblatts, wenn das Profil eine relative Profildicke von mehr als 49 %, insbesondere mehr als 55 % oder gleich 55 %, aufweist, wobei die Dickenrücklage kleiner als 35 % ist. Dieses Profil eignet sich insbesondere für rotorblattwurzelseitige Profile.

Die aerodynamischen Eigenschaften des erfindungsgemäßen Rotorblatts sind insbesondere dadurch besonders gut, dass das jeweilige Profil eine stumpfe Hinterkante aufweist, wobei die Dicke der stumpfen Hinterkante bzw. die relative Hinterkantendicke in einem Bereich bzw. in einer Größenordnung von 15 % bis 70 % der Sehnenlänge des Profils an dieser Stelle aufweist. Besonders bevorzugt ist eine relative Hinterkantendicke von 20 % bis 60 %, insbesondere von 25 % bis 50 %, insbesondere von 30 % bis 45 %, insbesondere 35 % bis 40 % jeweils der Sehnenlänge. Es können auch andere Bereiche bevorzugt sein. Die hohen Auftriebsbeiwerte ergeben sich besonders effizient durch die stumpfe Hinterkante.

Besonders bevorzugt ist ein Profil eines erfindungsgemäßen Rotorblatts, wenn dieses auf der Saugseite zur Hinterkante hin eine s-Form bzw. eine konkave Form aufweist, d.h. nach innen gewölbt ist, also zur Sehne hin gewölbt ist. Vorzugsweise ist auch auf der Druckseite eine entsprechende konkave Wölbung zur Hinterkante vorgesehen. Die konkave Wölbung zur Hinterkante ist vorzugsweise auf der Druckseite stärker ausgeprägt als auf der Saugseite. Vorzugsweise beginnt die konkave Wölbung auf der Saugseite erst ab 60 % der Sehnenlänge gemessen von der Vorderkante des Profils. Vorzugsweise ist der Übergang von der Saugseite bzw. der Druckseite zur Hinterkante des Profils möglichst scharf. Bei einer Blatttiefe bzw. Sehnenlänge von 2 m - 5,5 m ist ein Übergangsradius von weniger als 10 mm, insbesondere vorzugsweise weniger als 7 mm, insbesondere vorzugsweise weniger als 5 mm, vorgesehen.

Vorzugsweise hat das Rotorblatt ein Profil, das eine relative Profildicke von mehr als 45 %, insbesondere mehr als 50 % oder gleich 50 %, aufweist, wobei insbesondere bei turbulenter Umströmung eine Gleitzahl größer als 6, insbesondere größer als 10, insbesondere größer als 15, erreicht wird. Bei Verwendung dieses Profils im Blattwurzel nahen Bereich des Rotorblattes wird trotz der hohen relativen Profildicken von mehr als 45 % auch ohne extreme Blatttiefe die in der Anströmung enthaltene Energie effizient ausgenutzt. Dieser Effekt wird auch weitestgehend mit verschmutzten Profilen erreicht, also bei komplett turbulenter Umströmung der Profile. Außerdem sind die vorgenannten Profile für das erfindungsgemäße Rotorblatt und auch die folgenden dahingehend entwickelt worden, dass der Arbeitsbereich bei hohen aerodynamischen Anstellwinkeln, beispielsweise > 10° liegt. Hierdurch wird eine produktionstechnisch ungünstige hohe geometrische Blattverwindung vermieden. Vorzugsweise ist die relative Profildicke größer als 49 %, insbesondere größer oder gleich 56 %.

Ein besonders bevorzugtes Profil eines Rotorblatts mit Vortexgenerator einer Windenergieanlage ist dadurch gekennzeichnet, dass das Profil eine relative Profildicke von mehr als 45 % bei einer Dickenrücklage von weniger als 50 % aufweist, wobei ein Auftriebsbeiwert bei turbulenter Umströmung von mehr als 1,8, insbesondere mehr als 2,8, erreicht wird.

Vorzugsweise liegt die relative Profildicke des Rotorblatts bei mehr als 65 %, insbesondere größer oder gleich 70 %. Vorzugsweise werden die Auftriebsbeiwerte bei Auslegungsanströmwinkeln bzw. Anstellwinkeln von 12° bis 30°, insbesondere 16° bis 24°, erreicht.

Ein weiteres besonders bevorzugtes Rotorblatt hat ein Profil, mit einem Nasenradius, der größer als 18 % der Profiltiefe ist, wobei das Profil im Nasenbereich asymmetrisch ist.

Vorzugsweise wird ein Verhältnis des maximalen Auftriebsbeiwertes bei turbulenter Umströmung zu dem maximalen Auftriebsbeiwert bei laminarer Umströmung von mehr als 0,75 bis 1,0 erreicht.

Vorzugsweise weist die Saugseite und die Druckseite des Profils des Rotorblatts im hinteren Bereich jeweils wenigstens abschnittsweise eine konkave Kontur auf. Hierdurch kommen deutlich kleinere Übergeschwindigkeiten auf der Saugseite zustande, während auf der Druckseite ein deutlicher Anteil des Gesamtauftriebs des Profils erzeugt wird, durch ein so genanntes "rear loading".

Vorzugsweise ist eine Mehrzahl von verschiedenen Profilen in dem Rotorblatt vorgesehen, die in wenigstens einem Bereich eines Rotorblatts einer Windenergieanlage realisiert sind und die sich harmonisch zueinander verhalten. Unter einem harmonischen Verhalten wird insbesondere ein kontinuierlicher Verlauf, insbesondere eine diskontinuitätsfreie Ableitung verstanden.

Im Rahmen der Erfindung wird eine turbulente Strömung bzw. Profilumströmung dann als vorliegend angesehen, wenn der aerodynamisch sauber definierte Umschlag der Strömung von laminar nach turbulent vorliegt. Eine turbulente Umströmung ist im Rahmen der Erfindung insbesondere ein Strömungszustand, bei dem mehr als 90 %, insbesondere mehr als 92 %, der Oberfläche eine turbulente Grenzschicht aufweisen. Dieses wird im Versuch und auch bei den folgenden dargestellten Messungen durch Rauigkeiten simuliert, die gerade groß genug sind, um einen Umschlag von laminarer Grenzschicht zu turbulenter Grenzschicht zu bewirken. Hierzu wird beispielsweise ein Zackenband an der Saugseite bei 5 % vom Nasenpunkt und auf der Druckseite bei 10 % vom Nasenpunkt, manchmal auch bei 5 % (Saugseite) und 5 % (Druckseite) bzw. 3 % / 5 % oder 3 % / 3 % realisiert. Die genaue Lage des Zackenbandes hängt hierbei vom Nasenradius ab und dem zu vermessenden Anstellwinkel.

Ein Vorteil des erfindungsgemäßen Rotorblatts liegt in den hohen Auftriebsbeiwerten, sowohl im sauberen als auch im verschmutzten Zustand, also bei laminarer als auch bei turbulenter Strömung. Ein weiterer Vorteil liegt darin, dass die Arbeitspunkte der Profile des erfindungsgemäßen Rotorblatts in der Nähe der Rotorblattwurzel bei hohen aerodynamischen Anstellwinkeln liegen, wodurch die geometrische Verwindung des gesamten Rotorblattes deutlich verringert werden kann, was ein großer Vorteil in der Produktion ist und auch zu niedrigeren Rotorblattgewichten führt. Es kann auch vorkommen, dass die maximale Blattverwindung produktionstechnisch fest vorgegeben ist, so dass mit den Profilen des Rotorblatts in der Nähe der Blattwurzel in Kombination mit dem Vortexgenerator oder den Vortexgeneratoren, die im Bereich dieses Profils bzw. dieser Profile angeordnet sind, erreicht wird, dass diese noch im optimalen Arbeitspunkt bei sehr hohen Auftriebsbeiwerten eingesetzt werden können, was bei den bisher bekannten Profilen in dem rotorblattwurzelnahen Bereich nicht möglich ist. Bei den verwendeten Profilen können so mit bekannten Profilen in der Blattspitze Anstellwinkel vorherrschen, bei denen ein optimaler Auftrieb erzeugt wird und gleichzeitig andere Anstellwinkel in der Nähe der Blattwurzel vorherrschen, die für die Profile dort noch einen optimalen oder zumindest noch akzeptablen Auftrieb erzeugen.

Ein weiterer Vorteil liegt in der genau auf einen guten Straak innerhalb des Rotorblattes ausgelegten Dickenrücklage. Dieses ermöglicht einen maximalen Hauptgurtabstand im Bereich von relativen Profildicken von 35 % bis zum Zylinder (an der Rotorblattwurzel) bei möglichst geringen Krümmungen im Nasen- und Hinterkantengurt.

Insbesondere von Vorteil sind die im Vergleich weit vorne liegende maximale Profildicke und/oder der relativ große Nasenradius.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen.

Besonders bevorzugt und vorteilhaft ist eine Hinterkantendicke von 26 % der Sehnenlänge bei einem 50 % dicken Profil. Hierzu wird insbesondere Bezug genommen auf die folgenden Figuren, auf denen Ausführungsbeispiele für erfindungsgemäße Profile angegeben sind. Entsprechend ist es von besonderem Vorteil, wenn die Hinterkantendicke ca. 50 % der Sehnenlänge bei einem 70 % dicken Profil ist. Auch hierzu wird insbesondere auf die Figuren verwiesen.

Erfindungsgemäß und besonders bevorzugt ist ein Rotorblatt einer Windenergieanlage mit einem Profil, das eine Oberseite (Saugseite) und eine Unterseite (Druckseite) aufweist, wobei das Profil eine Skelettlinie und eine Sehne zwischen der Vorderkante und der Hinterkante des Profils umfasst, wobei die Skelettlinie wenigstens abschnittsweise unterhalb der Sehne in Richtung der Druckseite verläuft und wobei das Profil eine relative Profildicke von mehr als 45 %, insbesondere mehr als 49 %, insbesondere mehr als 69 %, aufweist, wobei auf der Saugseite des Rotorblatts wenigstens ein Vortexgenerator im Bereich des Profils angeordnet ist, und zwar vorzugsweise zwischen 20 und 40 % der Profiltiefe, d.h. von der Vorderkante aus gesehen. Zudem ist hierbei vorzugsweise eine S-förmige Skelettlinie mit negativer Wölbung im vorderen Bereich des Profils, d.h. zur Vorderkante hin, vorgesehen und eine positive Wölbung im hinteren Bereich des Profils. Ferner ist vorzugsweise eine S-förmige Druckseite vorgesehen, die im vorderen Bereich des Profils konvex ist und im hinteren Bereich konkav. Weiter vorzugsweise ist eine S-förmige Saugseite vorgesehen, die im vorderen Bereich konvex ist und im hinteren Bereich konkav. Diese erfindungsgemäßen Ausführungsformen eines Rotorblatts mit entsprechenden Profilen sind besonders bevorzugt mit Vortexgeneratoren versehen, die einen dreieckigen Grundriss bzw. Aufriss haben. Diese sind vorzugsweise und vorteilhaft paarweise gegenläufig angeordnet, so dass gegenläufig rotierende Wirbel erzeugt werden. Besonders vorteilhaft haben die Vortexgeneratoren eine Höhe, die kleiner oder gleich der örtlichen Grenzschichtdicke ist. Zudem sind die Vortexgeneratoren vorzugsweise zwischen 15 % und 45 % der Sehnenlänge gemessen von der Vorderkante des Profils und besonders vorzugsweise zwischen 20 % und 40 % der Profiltiefe angeordnet.

Vorzugsweise weist das Profil des Rotorblattes eine stumpfe Hinterkante auf, wobei die Hinterkantendicke je nach Dicke des Profils unterschiedlich sein kann. Hierbei sind die folgenden Merkmalskombinationen besonders bevorzugt. Ein Profil mit mehr als 45 % Dicke hat vorzugsweise eine Hinterkantendicke von mehr als 15 % und entsprechende Vortexgeneratoren. Ein Profil mit mehr als 49 % Dicke hat vorzugsweise eine Hinterkantendicke von mehr als 20 % und Vortexgeneratoren sind vorgesehen. Ein weiteres Profil mit mehr als 69 % Dicke hat eine Hinterkantendicke von vorzugsweise mehr als 45 %. Es sind entsprechend auch Vortexgeneratoren vorgesehen.

Diese vorgenannten Profile haben vorzugsweise eine S-förmige Skelettlinie mit negativer Wölbung im vorderen Bereich des Profils und eine positive Wölbung im hinteren Bereich des Profils.

Zudem kann vorzugsweise vorgesehen sein, dass diese Profile eine S-förmige Druckseite aufweisen, die vorne konvex und hinten konkav ist. Ferner vorzugsweise kann ein Profil mit einer 45%igen Dicke vorgesehen sein, wobei dann eine Hinterkantendicke von mehr als 15 % vorgesehen ist. Es sind zudem Vortexgeneratoren und eine S-förmige Druckseite vorgesehen, die im vorderen Bereich konvex und im hinteren Bereich konkav ist. Außerdem ist vorzugsweise ein Profil mit mehr als 49 % Dicke mit einer Hinterkantendicke von mehr als 20 % vorgesehen und entsprechende Vortexgeneratoren bei dem Rotorblatt, das ein entsprechendes Profil aufweist. Hierbei ist eine S-förmige Druckseite vorgesehen, die im vorderen Bereich konvex und im hinteren Bereich konkav ist. Ferner vorzugsweise ist ein Profil mit mehr als 69 % Dicke vorgesehen mit einer Hinterkantendicke von mehr als 45 % und einem entsprechenden Vortexgenerator, wobei eine S-förmige Druckseite vorgesehen ist, die vorne konvex und hinten konkav ist.

Wenn im Rahmen der Erfindung davon die Rede ist, dass ein Profil mit Vortexgeneratoren versehen ist, bedeutet dieses, dass ein Vortexgenerator auf einem Rotorblatt angeordnet ist, und zwar in dem Bereich, an dem dieses Profil vorgesehen ist. Die Vortexgeneratoren sind vorzugsweise besonders bevorzugt bei dem vorherigen Beispiel zwischen 20 % und 40 % der Sehne von der Vorderkante aus gesehen angeordnet.

Im Rahmen der Erfindung sind auch andere Kombinationen von Merkmalen möglich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines erfindungsgemäßen Rotorblattes mit eingeschriebenen Profilen,
- Fig. 2: ein Profil eines erfindungsgemäßen Rotorblatts im Vergleich zu einem Profil des Standes der Technik,
- Fig. 3: ein weiteres Profil eines erfindungsgemäßen Rotorblatts im Vergleich zu einem weiteren Profil des Standes der Technik,
- Fig. 4: ein Profil des Standes der Technik im Vergleich zu drei Profilen für ein erfindungsgemäßes Rotorblatt,
- Fig. 5: ein schematisches Diagramm betreffend berechnete Profilpolaren eines Profils eines Rotorblatts ohne Vortexgenerator,
- Fig. 6: ein schematisches Diagramm betreffend berechnete Profilpolaren eines Profils des Standes der Technik,
- Fig. 7: ein schematisches Diagramm gemessener Profilpolaren eines Profils eines Rotorblatts ohne Vortexgenerator,
- Fig. 8: ein schematisches Diagramm gemessener Profilpolaren eines Profils des Standes der Technik,
- Fig. 9: ein Profil eines erfindungsgemäßen Rotorblatts mit Vortexgenerator in schematischer Darstellung,
- Fig. 10: ein schematisches Diagramm von Profilpolaren eines Profils eines Rotorblatts gemäß der Erfindung mit Vortexgenerator und eines Profils eines Rotorblatts ohne Vortexgenerator und
- Fig. 11: eine schematische Darstellung zweier Vortexgeneratoren.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

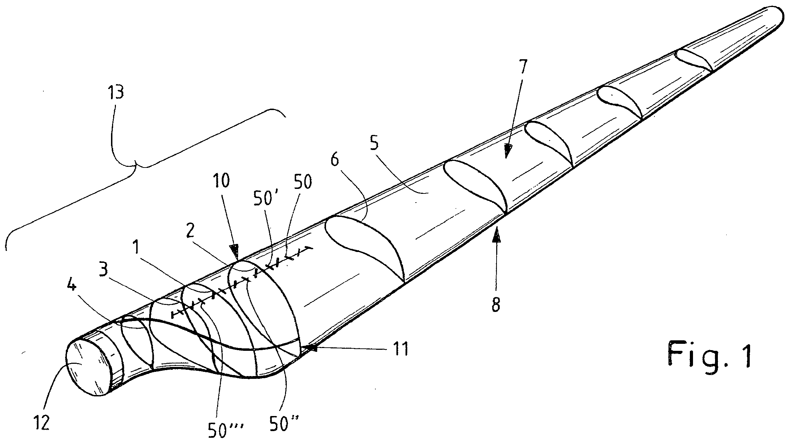

Fig. 1 zeigt schematisch ein Rotorblatt 5 einer Windenergieanlage, die nicht dargestellt ist, wobei schematisch schon einige Profile 1-4 sowie 6 eingezeichnet sind.

In einem Übergangsbereich 13 in der Nähe einer Rotorblattwurzel 12 sind Profile 1-4 vorgesehen. Der Übergangsbereich 13 kann sich beispielsweise dadurch auszeichnen, dass die Hinterkante 11 nicht mehr wie bei den weiteren Profilen 6 vorgesehen spitz ausläuft, sondern stumpf ausgebildet ist, und zwar beispielsweise umso stumpfer je näher die Profile zur Rotorblattwurzel 12 gelangen. Zur besseren Veranschaulichung ist auch die Vorderkante 10 angedeutet und eine Oberseite bzw. Saugseite 7 und eine Unterseite bzw. Druckseite 8. Von besonderem Interesse im Rahmen der Erfindung sind die Profile 1-4, die sich im Übergangsbereich 13 befinden und zusätzlich vorgesehene Vortexgeneratoren 50, 50', 50" und 50"'. Diese Profile 1-4 sollen nun im Weiteren erläutert werden.

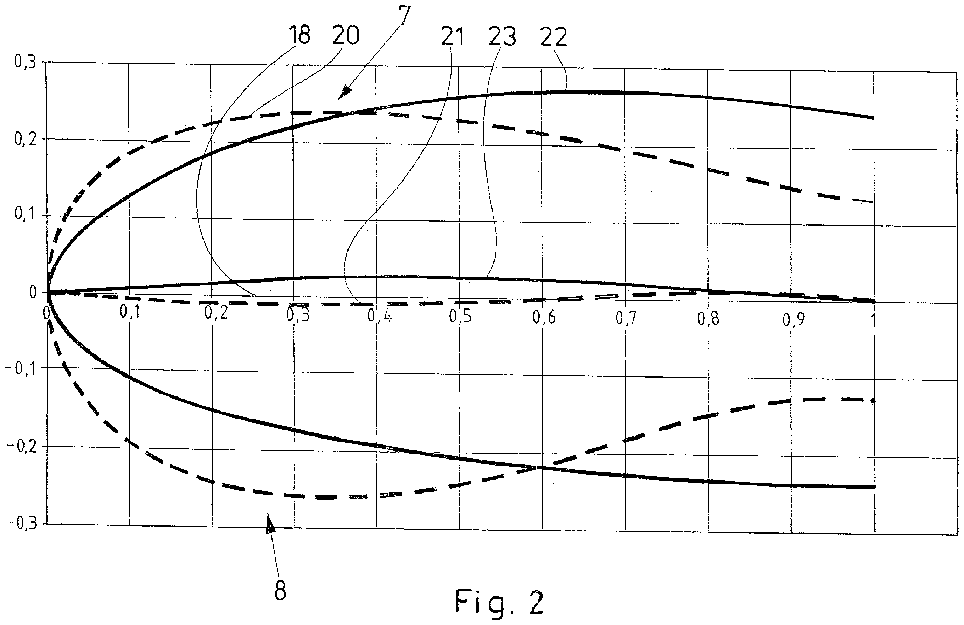

Fig. 2 zeigt ein Profil eines erfindungsgemäßen Rotorblatts 5 ohne Vortexgenerator im Vergleich zu einem Profil des Standes der Technik. Das Profil 20, das die Bezeichnung RE-W-50-B6 hat, weist eine im vorderen Profilbereich bis 60 % bzw. 0,6 der Sehnenlänge zur Druckseite 8 hin gekrümmte Skelettlinie 21 auf. Erst bei ca. 0,63 der Sehnenlänge schneidet die Skelettlinie 21 die Sehne 18 und geht in Richtung der Saugseite 7. Außerdem liegt im Vergleich zum Profil FX 83-W-500 (siehe Althaus, a.a.O., Seite 552, 553), das die Bezugsziffer 22 trägt, die maximale Profildicke relativ weit vorne. Bei dem Profil 20 liegt diese bei 34,4 % bzw. 0,344 der Profiltiefe bzw. Sehnenlänge. Die bekannten Profile, die in dem vorne angegebenen Dokument von Althaus genannt sind, haben Dickenrücklagen von 37,4 % bis 78,7 %.

Auch der Nasenradius des Profils 20 ist mit 23,3 % der Profiltiefe deutlich größer als die Vergleichsprofile mit Werten zwischen 5,6 % bis 14,8 %, wobei hier zu berücksichtigen ist, dass das Profil im Bereich der Nase auch asymmetrisch ist. Das Vergleichsprofil 22, nämlich das FX 83-W-500, hat auch eine Skelettlinie 23, die vollständig oberhalb der Sehne 18 zur Saugseite 7 hin angeordnet ist. Die relative Profildicke des Profils 22 liegt bei 50 %. Diese liegt bei einer Profiltiefe von 78,7 %. Es liegt eine maximale Wölbung von 2,539 % vor bei einer Profiltiefe von 52,7 %. Der Nasenradius beträgt 5,6 %. Es liegt eine Profilquerschnittsfläche von 0,4134 vor und eine Hinterkantendicke von 47,9 %. Das erfindungsgemäße Profil 20 weist eine relative Profildicke von 50 % bei einer Profiltiefe von 34,4 % und einer maximalen Wölbung von 1,23 % auf. Die maximale Wölbung liegt bei einer Profiltiefe von 82,5 %. Der Nasenradius beträgt 23,3 %, die Profilquerschnittsfläche 0,3927 und die Hinterkantendicke liegt bei 25,7 %. Es ist zu erkennen, dass insbesondere auf der Druckseite 8 im hinteren Bereich des Profils eine konkave Kontur des Profils gegeben ist. Diese ist auch auf der Saugseite 7 gegeben, allerdings nicht so stark und prominent ausgeprägt wie auf der Druckseite 8. Die Kontur des Profils 22 gemäß dem Stand der Technik ist im hinteren Bereich hingegen konvex.

Zudem weist das Profil für das erfindungsgemäße Rotorblatt eine stumpfe Hinterkante 11 auf, die eine Erstreckung von ungefähr 23 % bis 25 %, insbesondere 23,7 %, der Sehnenlänge aufweist.

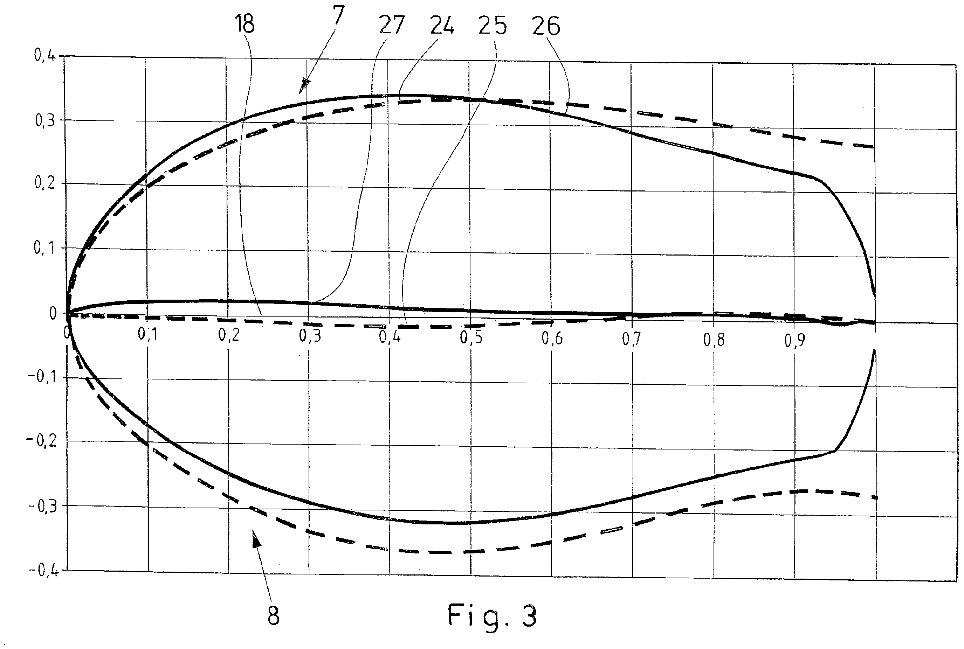

In Fig. 3 ist wieder ein Profil eines erfindungsgemäßen Rotorblatts 5 allerdings ohne Vortexgenerator, nämlich das Profil RE-W-70-B9 (Bezugsziffer 24), gegenüber einem Profil des Standes der Technik, nämlich dem Profil FX 79-W-660A (Bezugsziffer 26), dargestellt. Es sind auch die zugehörigen Skelettlinien 25 und 27 dargestellt. Auch in diesem Fall ist die Skelettlinie 25 des RE-W-70-B9 unterhalb der Sehne 18 zur Druckseite 8 angeordnet und die Skelettlinie 27 des FX 79-W-660A des Standes der Technik oberhalb der Sehne 18 zur Saugseite 7 hin angeordnet. Das Profil 24 weist eine relative Profildicke von 70 % auf bei einer Profiltiefe von 47,7 %. Es ist eine minimale bzw. betragsmäßig maximale Wölbung von 1,4 % bei einer Profiltiefe von 39,9 % vorgesehen. Die maximale positive Wölbung beträgt 1,18 % bei 85 % Profiltiefe. Der Nasenradius beträgt 23,87 %. Die stumpfe Hinterkante 11 hat eine Dicke von 50 % bis 60 % der Sehnenlänge.

Bei dem Profil 26 gemäß dem Stand der Technik liegt eine relative Profildicke von 66,4 % bei einer Profiltiefe von 46,7 % vor. Es liegt eine maximale Wölbung von 2,2 % vor bei einer Profiltiefe von 17,1 %. Der Nasenradius beträgt 4,1 %.

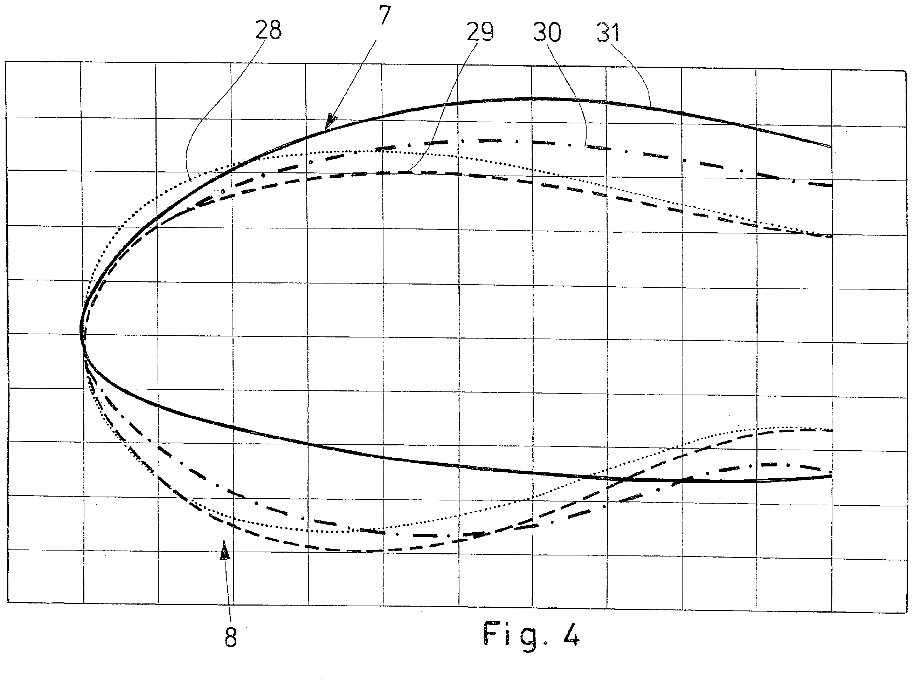

Fig. 4 zeigt vier weitere Profile eines Rotorblatts 5 einer Windenergieanlage, wobei die Profile 28, 29 und 30 Profile eines erfindungsgemäßen Rotorblatts 5 sind und ein Profil, nämlich das Profil 31, ein Profil des Standes der Technik ist.

Das Profil 31 entspricht dem FX 77-W-700 aus dem Stand der Technik. Dieses ist beispielsweise anhand des Dokuments Dieter Althaus "Niedriggeschwindigkeitsprofile", das oben angegeben ist, so zu realisieren, dass das Profil FX 77-W-500, das auf Seiten 162 und 163 angegeben ist, hinten weiter abgeschnitten wird, und zwar so, dass eine relative Dicke bzw. relative Profildicke von 70 % entsteht. Diese liegt dann naturgemäß bei einer relativ weit hinten liegenden Profiltiefe, in diesem Fall bei ungefähr 68 %.

Die Profile 28 entsprechend dem RE-W-70-A1, 29 entsprechend dem RE-W-70-A2 und 30 entsprechend RE-W-70-B1 haben auch eine relative Profildicke von 70 % bei einer Dickenrücklage von ca. 34 % für das Profil 28, ca. 37 % für das Profil 29 und ca. 50 % für das Profil 30. Auch hier ist bei den Profilen 28 bis 30 zu erkennen, dass zur Hinterkante des Profils konkave Konturen vorgesehen sind, die insbesondere auf der Druckseite 8 stärker ausgeprägt sind. Die stumpfen Hinterkanten 11 haben eine Erstreckung von 25 % bis 39 % der Sehnenlänge.

Die vorgenannten dargestellten Profile der Fig. 2, 3, und 4 sind Profile, die ohne Vortexgeneratoren dargestellt sind. Gemäß der Erfindung werden die Profile, die als Präfixe "RE-W" aufweisen und entsprechend so ausgelegt sind, um Höchstleistungen im aerodynamischen Sinne, d.h. insbesondere sehr hohe Auftriebsbeiwerte, insbesondere sowohl bei turbulenter als auch bei laminarer Strömung, erzeugen, und zwar bei entsprechend guten Gleitzahlen, nun gemäß der Erfindung mit wenigstens einem vorzugsweise mehreren Vortexgeneratoren versehen, und zwar auf der Saugseite 7 des Rotorblattes, um die Eigenschaften des Rotorblatts noch weiter zu verbessern. Hierdurch entsteht ein nicht erwarteter Synergieeffekt, da hierdurch außergewöhnlich hohe Auftriebsbeiwerte erzielt werden, die sonst nur mit entsprechenden Klappen in Hochauftriebssystemen bei Flugzeugtragflügeln erzielt werden. Die besonders guten Eigenschaften ergeben sich insbesondere aus einer Kombination der relativ dicken Profile mit den Vortexgeneratoren. Besonders bevorzugt ist das Vorsehen der entsprechend dicken stumpfen Hinterkanten, die vorstehend schon beschrieben wurden. Ferner vorzugsweise ist eine negative Skelettlinie vorgesehen und ferner vorzugsweise sind konkave Abschnitte im hinteren Bereich der Profile des Rotorblatts auf der Druckseite und insbesondere auch auf der Saugseite vorgesehen. Unter einer negativen Skelettlinie ist insbesondere eine Skelettlinie mit abschnittsweise negativer Wölbung gemeint. Die Skelettlinie ist vorzugsweise S-förmig, wobei sie im vorderen Abschnitt des Profils negativ gewölbt ist und im hinteren Abschnitt positiv gewölbt ist

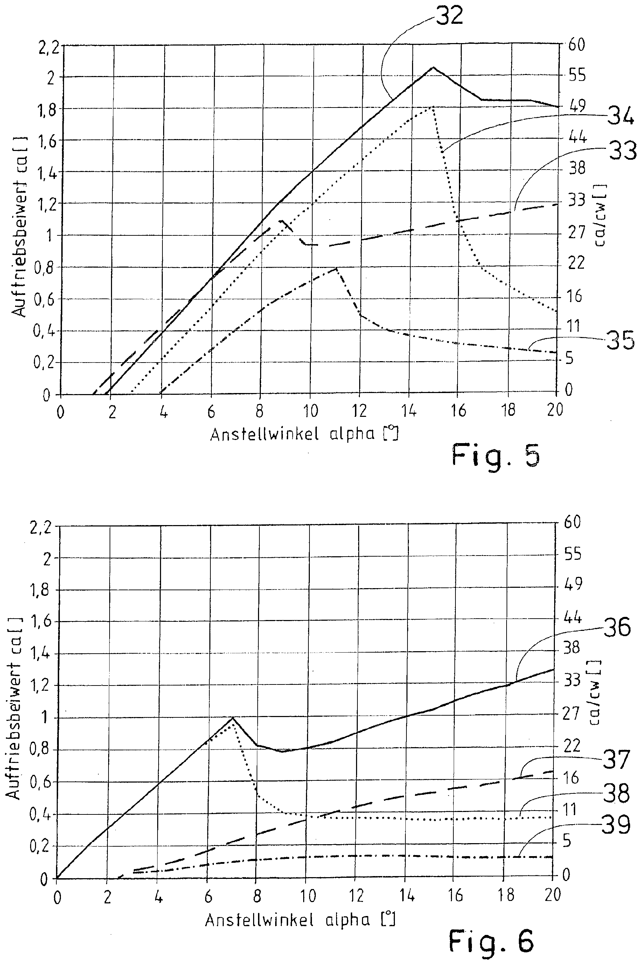

Die folgenden Profilpolaren der Fig. 5 bis 8 sind Profilpolaren von Profilen, die ohne Vortexgeneratoren berechnet wurden. Mit Vortexgeneratoren würden sich andere Profilpolaren ergeben, wie auch im Folgenden gezeigt wird.

Fig. 5 zeigt ein schematisches Diagramm betreffend berechneter Profilpolaren eines Profils eines erfindungsgemäßen Rotorblatts ohne Vortexgenerator, nämlich des RE-W-70-B9. Es ist der Auftriebsbeiwert cₐ über dem Anstellwinkel α (alpha) dargestellt und das Verhältnis des Auftriebsbeiwertes zum Widerstandsbeiwert c_{w}. Bei diesem Verhältnis handelt es sich um die Gleitzahl. Bei den Polaren der Fig. 5 handelt es sich um eine Berechnung der Profilpolaren für eine Reynoldszahl von 3 Mio. Es wurden entsprechende Rechnungen für eine turbulente Umströmung und eine laminare Umströmung vorgenommen. Die Profilpolare 32 stellt eine Berechnung des Auftriebsbeiwertes cₐ bei laminarer Umströmung und die Profilpolare 33 den entsprechenden Wert bei turbulenter Umströmung dar. Die Profilpolare für die Gleitzahl bei laminarer Umströmung ist mit der Bezugsziffer 34 versehen und entsprechend bei turbulenter Umströmung mit der Bezugsziffer 35. Es ist zu erkennen, dass der Auftriebsbeiwert ein Maximum bei ca. 14,8° des Anstellwinkels aufweist, und zwar bei laminarer Umströmung, und ein Maximum bei ca. 9° bei turbulenter Umströmung. Die Gleitzahl ist bei laminarer Umströmung auch bei ca. 14,8° mit einem Maximum versehen und bei turbulenter Umströmung bei ca. 11°.

Im Vergleich zu den entsprechenden Profilpolaren eines Profils gemäß Fig. 5 sind in Fig. 6 die entsprechenden Profilpolaren 36, 37, 38 und 39 eines bekannten Profils, nämlich des FX 79-W-660 A angegeben. Es ist insbesondere zu erkennen, dass ein lokales Maximum des Auftriebsbeiwertes bei laminarer Umströmung bei der Profilpolaren 36 bei ungefähr 7° gegeben ist und bei einer Profilpolaren betreffend die Gleitzahl bei laminarer Umströmung, die mit der Bezugsziffer 38 versehen ist, auch ein entsprechendes Maximum bei 7° des Anstellwinkels α vorliegt.

Bei turbulenter Umströmung ist durch die Profilpolare 37, die auch den Auftriebsbeiwert cₐ betrifft, klar zu erkennen, dass der Auftrieb deutlich minimiert ist. Entsprechendes gilt auch für die Profilpolare 39 betreffend die Gleitzahl bei turbulenter Umströmung.

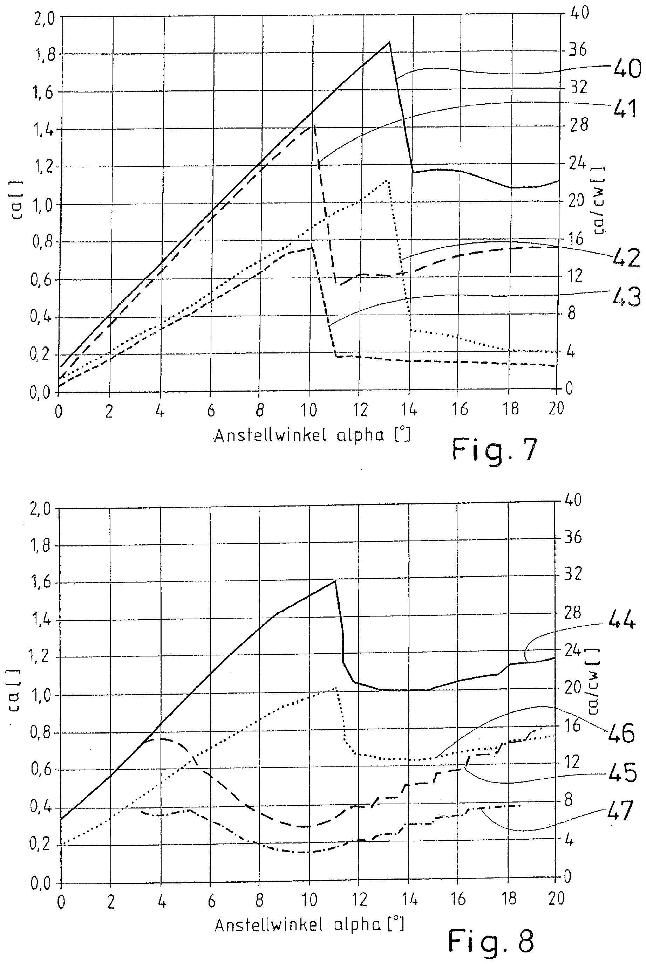

Fig. 7 zeigt ein schematisches Diagramm gemessener Profilpolaren eines Profils eines Rotorblatts ohne Vortexgenerator gemäß der Erfindung, nämlich des Profils RE-W-50-B6, das in der Fig. 2 schon dargestellt wurde. Die Profilpolare 40 stellt den Auftriebsbeiwert bei laminarer Umströmung bei einer Reynoldszahl von 3 Mio. dar. Es wird ein maximaler Auftriebsbeiwert von ca. 1,84 bei einem Winkel von ca. 13° erreicht.

Gut zu erkennen ist, dass auch bei turbulenter Umströmung gemäß den Profilpolaren 41 der Auftriebsbeiwert sich nur gering verringert. Es ist ein Maximum von 1,4 bei einem Anstell- bzw. Anströmwinkel α von ca. 10° gegeben. Die Reynoldszahl hier betrug bei der Messung 3,1 Mio. Die Profilpolare 42 betreffend die Gleitzahl (cₐ/c_{w}) bei laminarer Umströmung hat ein Maximum im Anstellwinkel von ca. 13°. Der Quotient ist hier ca. 22. Bei turbulenter Umströmung verringert sich die maximale Gleitzahl gemäß der Profilpolare 43 auf 15,5 bei einem Anstellwinkel von ca. 10°.

Zum Vergleich ist ein entsprechendes schematisches Diagramm in Fig. 8 gezeigt, das gemessene Profilpolaren eines Profils des Standes der Technik, nämlich des Profils FX 77-W-500, darstellt. Im Vergleich zu den Profilpolaren des Auftriebsbeiwertes cₐ 44 bei laminarer Umströmung und der Profilpolare 46 betreffend die Gleitzahl bei laminarer Umströmung, die an sich schon schlechtere Werte als gemäß der Erfindung bei laminarer Umströmung aufweisen, brechen die Profilpolaren bei turbulenter Umströmung vollständig zusammen. So ist hier auch die gemessene Profilpolare für den Auftriebsbeiwert cₐ bei turbulenter Umströmung mit 45 gekennzeichnet und die entsprechende gemessene Profilpolare 47 betreffend die Gleitzahl auch für turbulente Umströmung dargestellt.

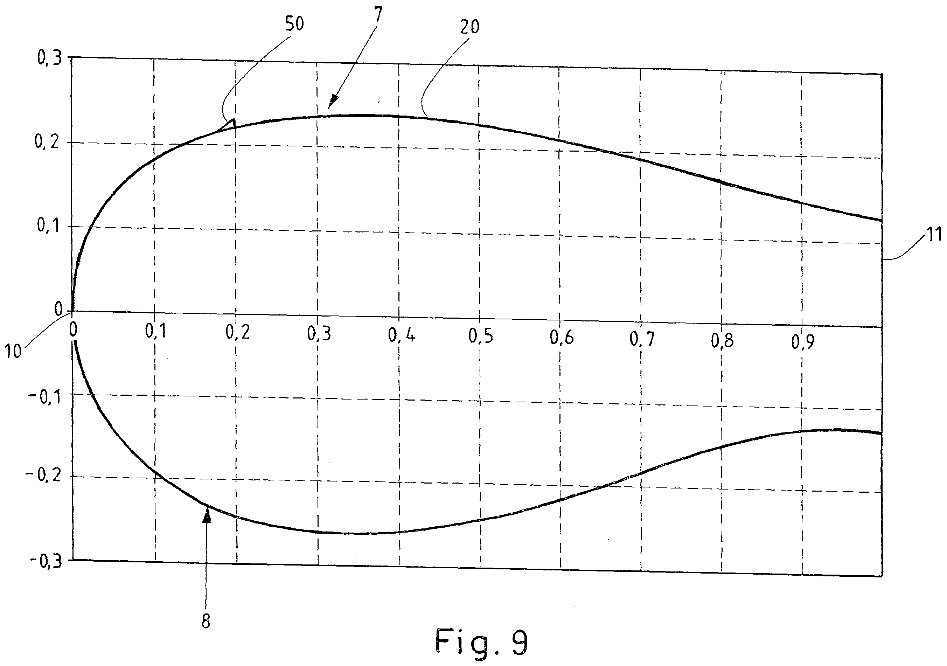

Fig. 9 zeigt schematisch ein Profil eines erfindungsgemäßen Rotorblatts 5. Das Profil 20 entspricht einem RE-W-50-B6 der Anmelderin. Bei ungefähr 19,5 oder 20 % der Sehnenlänge gemessen von der Vorderkante 10 ist auf der Saugseite 7 ein Vortexgenerator 50 vorgesehen. Das gezeigte Profil 20 entspricht in etwa dem Profil 20 aus der Fig. 2, bis auf dass in Fig. 9 ein Vortexgenerator 50 hinzugekommen ist. Dieser Vortexgenerator 50 sorgt nun für einen deutlich erhöhten Auftriebsbeiwert, wie in Fig. 10 schematisch gezeigt ist. In Fig. 10 ist mit 40 eine Profilpolare des Profils aus Fig. 2, nämlich des dort gezeigten Profils 20 mit der Bezeichnung RE-W-50-B6, gezeigt. Wie zu erkennen ist, verläuft die Profilpolare vom Anstellwinkel von - 20° bis fast + 40 °. Die Profilpolare 40 des Profils 20 des RE-W-50-B6 kommt bis zu einem Auftriebsbeiwert cₐ von 1,8 und bricht dann bei einem Anstellwinkel von 13° ein. Es ergibt sich hier, wie auch durch die Pfeile dargestellt ist, ein entsprechendes Hysterese-Verhalten, wie dieses an sich bekannt ist.

Durch Vorsehen des Vortexgenerators 50 gemäß Fig. 9, dessen Hinterkante bei 20 % der Sehnenlänge gemessen von der Vorderkante 10 angeordnet ist, verbessert sich der Auftriebsbeiwert dergestalt, dass erst bei einem Anstellwinkel von 36° der Auftriebsbeiwert zusammenbricht. Es wird bei diesem Winkel ein Auftriebsbeiwert cₐ von über 3 erzielt. Die Polare ist hier entsprechend mit 48 gekennzeichnet. Diese drastische Verbesserung des Auftriebsbeiwertes ist ein für die entsprechenden Fachleute völlig überraschendes Ergebnis.

Fig. 11 zeigt noch entsprechend schematisch zwei Vortexgeneratoren 50 und 50' in entsprechenden Anordnungen und Ausrichtungen. Die Flügel 52 und 53 der Flügelpaare 51 des Vortexgenerators 50 und auch entsprechend des Vortexgenerators 50' sind relativ zu einer Schnittebene eines Profils in einen Winkel β bei dem Flügel 53 und - β bei dem Flügel 52 angeordnet. Zueinander laufen die beiden Flügel 52, 53 des Flügelpaars 51 des Vortexgenerators 50 in einem Winkel von 2β zueinander nach vorne zur Vorderkante 10 des Profils bzw. des Rotorblatts aufeinander zu. Durch diese Ausgestaltung werden durch jeden Flügel 52, 53 zueinander gespiegelte Wirbel erzeugt, die einen besonders hohen Auftriebsbeiwert ermöglichen. Die Höhe h der jeweiligen Flügel 52, 53 entspricht in etwa der Höhe der Grenzschicht, die durch die Reibung an der Oberfläche des Rotorblatts erzeugt wird, also ca. 2 cm bis 6 cm. Die Länge l entspricht 1,5 bis 4 mal der Höhe h, insbesondere ist eine Länge von 2,5 h bevorzugt. Der Abstand s der Flügel 52, 53 beträgt vorzugsweise zwischen 1,5 und 5 h, insbesondere bevorzugt 3 h. Der Abstand der Flügelpaare 51 bzw. der Vortexgeneratoren 50, 50' zueinander liegt im Bereich zwischen 3 und 9 h, vorzugsweise bei 6 h.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1 - 4: Profil
- 5: Rotorblatt
- 6: Profil
- 7: Saugseite
- 8: Druckseite
- 10: Vorderkante
- 11: Hinterkante
- 12: Blattwurzel
- 13: Übergangsbereich
- 18: Sehne
- 20: Profil RE-W-50-B6
- 21: Skelettlinie des RE-W-50-B6
- 22: Profil FX 83-W-500
- 23: Skelettlinie des FX 83-W-500
- 24: Profil RE-W-70-B9
- 25: Skelettlinie des RE-W-70-B9
- 26: Profil FX 79-W-660 A
- 27: Skelettlinie des FX 79-W-660A
- 28: Profil RE-W-70-A1
- 29: Profil RE-W-70-A2
- 30: Profil RE-W-70-B1
- 31: Profil FX 77-W-700
- 32: Profilpolare cₐ laminar
- 33: Profilpolare cₐ turbulent
- 34: Profilpolare cₐ/c_{w} laminar
- 35: Profilpolare cₐ/c_{w} turbulent
- 36: Profilpolare cₐ laminar
- 37: Profilpolare cₐ turbulent
- 38: Profilpolare cₐ/c_{w} laminar
- 39: Profilpolare cₐ/c_{w} turbulent
- 40: Profilpolare cₐ laminar
- 41: Profilpolare cₐ turbulent
- 42: Profilpolare cₐ/c_{w} laminar
- 43: Profilpolare cₐ/c_{w} turbulent
- 44: Profilpolare cₐ laminar
- 45: Profilpolare cₐ turbulent
- 46: Profilpolare cₐ/c_{w} laminar
- 47: Profilpolare cₐ/c_{w} turbulent
- 48: Profilpolare cₐ laminar
- 50, 50', 50", 50'": Vortexgenerator
- 51: Flügelpaar
- 52: Flügel
- 53: Flügel
- h: Höhe
- l: Länge
- s: Flügelabstand
- z: Vortexgeneratorabstand

## Patentansprüche

1. Rotorblatt (5) einer Windenergieanlage mit einem Profil (1-4), das eine Oberseite (Saugseite) (7) und eine Unterseite (Druckseite) (8) aufweist, wobei das Profil (1-4) eine Skelettlinie (21, 25) und eine Sehne (18) zwischen der Vorderkante (10) und der Hinterkante (11) des Profils (1-4) umfasst, wobei das Profil (1-4) eine relative Profildicke von mehr als 45 % aufweist, wobei auf der Saugseite (7) des Rotorblatts (5) wenigstens ein Vortexgenerator (50, 50', 50", 50'") im Bereich des Profils (1-4) angeordnet ist, wobei das Profil (1-4) mit einer stumpfen Hinterkante versehen ist, wobei die Hinterkantendicke zwischen 15 % und 70 % der Sehnenlänge ist, **dadurch gekennzeichnet, dass** der wenigstens eine Vortexgenerator (50 - 50'") in einem Bereich von 20 % bis 28 % einer relativen Profiltiefe des Profils (1-4) angeordnet ist.

2. Rotorblatt (5) nach Anspruch 1, **dadurch gekennzeichnet, dass** die Skelettlinie (21, 25) wenigstens abschnittsweise unterhalb der Sehne (18) in Richtung der Druckseite (8) verläuft.

3. Rotorblatt (5) nach Anspruch 1 oder 2, **dadurch gekennzeichnet, dass** der wenigstens eine Vortexgenerator (50 - 50'") ein Flügelpaar (51) umfasst, wobei insbesondere die Flügel (52, 53) in einem Winkel zueinander angeordnet sind, der in einem Bereich von 10° bis 50°, insbesondere 20° bis 40°, insbesondere bei 30°, liegt.

4. Rotorblatt (5) nach einem der Ansprüche 1 bis 3, **dadurch gekennzeichnet, dass** der wenigstens eine Vortexgenerator (50 - 50'") im nabennahen Bereich (13) des Rotorblatts (5) angeordnet ist.

5. Rotorblatt (5) nach einem der Ansprüche 1 bis 4, durch gekennzeichnet, dass der wenigstens eine Vortexgenerator (50 - 50'") höchstens eine Höhe hat, die der Höhe einer sich im Betrieb des Rotorblatts (5) ausbildenden Luftgrenzschicht auf der Saugseite (7) des Rotorblatts (5) entspricht, wobei die Luftgrenzschicht dadurch definiert ist, dass die Luftgeschwindigkeit in der Luftgrenzschicht durch Reibung an der Rotorblattoberfläche der Saugseite (7) um wenigstens 1 % reduziert ist.

6. Rotorblatt (5) nach einem der Ansprüche 1 bis 5, **dadurch gekennzeichnet, dass** mehrere Vortexgeneratoren (50 - 50"') vorgesehen sind, die nebeneinander im Wesentlichen parallel zu einer Längsachse des Rotorblatts (5) angeordnet sind.

7. Rotorblatt (5) nach Anspruch 6, **dadurch gekennzeichnet, dass** mehrere Vortexgeneratoren (50 - 50"'), insbesondere alle Vortexgeneratoren (50 - 50'"), bei einer relativen Profiltiefe von 20 % bis 40 % von der Vorderkante (10) aus gesehen angeordnet sind.

8. Rotorblatt (5) nach einem der Ansprüche 1 bis 7, **dadurch gekennzeichnet, dass** die Skelettlinie (21, 25) in einem Abschnitt zwischen 0 % bis 60 % der Profiltiefe des Profils (1-4) unterhalb der Sehne (18) angeordnet ist.

9. Rotorblatt (5) nach einem der Ansprüche 1 bis 8, **dadurch gekennzeichnet, dass** die Skelettlinie (21, 25) vollständig in einem Abschnitt zwischen 5 % bis 50 %, insbesondere 2 % bis 60 %, unterhalb der Sehne (18) angeordnet ist.

10. Rotorblatt (5) nach einem der Ansprüche 1 bis 9, **dadurch gekennzeichnet, dass** der Betrag der maximalen Wölbung kleiner als 1,5 % ist.

11. Rotorblatt (5) nach einem der Ansprüche 1 bis 10, **dadurch gekennzeichnet, dass** die zweite Ableitung der Skelettlinie (21, 25) (Skelettlinienkrümmung) von 10 % bis 40 %, insbesondere von 5 % bis 50 %, insbesondere von 2 % bis 60 %, der Profiltiefe entweder 0 oder positiv ist.

12. Rotorblatt (5) nach einem der Ansprüche 1 bis 11, **dadurch gekennzeichnet, dass** das Profil (1-4) eine relative Profildicke von mehr als 49 %, insbesondere mehr als 55 % oder gleich 55 %, aufweist, wobei die Dickenrücklage kleiner als 35 % ist.

13. Rotorblatt (5) nach einem der Ansprüche 1 bis 12, **dadurch gekennzeichnet, dass** die relative Profildicke bei mehr als 65 % liegt, insbesondere größer oder gleich 70 % ist.

14. Rotorblatt (5) nach einem der Ansprüche 1 bis 13, **dadurch gekennzeichnet, dass** ein Nasenradius vorgesehen ist, der größer als 18 % der Profiltiefe ist, wobei das Profil (1-4) im Nasenbereich asymmetrisch ist.

15. Rotorblatt (5) nach einem der Ansprüche 1 bis 12, **dadurch gekennzeichnet, dass** die Saugseite (7) und die Druckseite (8) des Profils (1-4) im hinteren Bereich jeweils wenigstens abschnittsweise eine konkave Kontur aufweisen.

## Claims

1. A rotor blade (5) of a wind energy installation having a profile (1 - 4) which has an upper side (suction side) (7) and a lower side (pressure side) (8), wherein the profile (1 - 4) has a camber line (21, 25) and a chord (18) between the leading edge (10) and the trailing edge (11) of the profile (1 - 4), wherein the profile (1 - 4) has a relative profile thickness of more than 45 %, wherein at least one vortex generator (50, 50', 50", 50"') is arranged on the suction side (7) of the rotor blade (5) in the region of the profile (1 - 4), wherein the profile (1 - 4) is provided with a blunt trailing edge, wherein the thickness of the trailing edge is between 15 % and 70 % of the chord length, **characterized in that** the at least one vortex generator (50 - 50"') is arranged in a region from 20 % to 28 % of a relative profile depth of the profile (1 - 4).

2. The rotor blade (5) according to claim 1, **characterized in that** the camber line (21, 25) extends below the chord (18) in the direction of the pressure side (8), at least in sections.

3. The rotor blade (5) according to claim 1 or 2, **characterized in that** the at least one vortex generator (50 - 50"') comprises a pair of blades (51), wherein in particular the blades (52, 53) are arranged at an angle to one another which angle lies within a range of from 10° to 50°, in particular from 20° to 40°, in particular 30°.

4. The rotor blade (5) according to any one of the claims 1 to 3, **characterized in that** the at least one vortex generator (50 - 50"') is arranged in the region (13) of the rotor blade (5) that is close to the hub.

5. The rotor blade (5) according to any one of the claims 1 to 4, **characterized in that** the at least one vortex generator (50 - 50"') has a height, at most, which corresponds to the height of an air boundary layer which forms on the suction side (7) of the rotor blade (5) during operation of the rotor blade (5), wherein the air boundary layer is defined **in that** the air velocity in the air boundary layer is reduced by at least 1 % as a result of friction on the rotor blade surface of the suction side (7).

6. The rotor blade (5) according to any one of the claims 1 to 5, **characterized in that** a plurality of vortex generators (50 - 50"') are provided which are arranged side by side substantially parallel to a longitudinal axis of the rotor blade (5).

7. The rotor blade (5) according to claim 6, **characterized in that** several of the vortex generators (50 - 50"'), in particular all of the vortex generators (50 - 50"'), are arranged at a relative profile depth of from 20 % to 40 % as seen from the leading edge (10).

8. The rotor blade (5) according to any one of the claims 1 to 7, **characterized in that** the camber line (21, 25) is arranged in a portion between 0 % and 60 % of the profile depth of the profile (1 - 4) below the chord (18).

9. The rotor blade (5) according to any one of the claims 1 to 8, **characterized in that** the camber line (21, 25) is arranged completely within a portion between 5 % to 50 %, in particular 2 % to 60 %, below the chord (18).

10. The rotor blade (5) according to any one of the claims 1 to 9, **characterized in that** the amount of the maximum blade camber is less than 1.5 %.

11. The rotor blade (5) according to any one of the claims 1 to 10, **characterized in that** the second derivative of the camber line (21, 25) (camber line curvature) from 10 % to 40 %, in particular from 5 % to 50 %, in particular from 2 % to 60 %, of the profile depth is either 0 or positive.

12. The rotor blade (5) according to any one of the claims 1 to 11, **characterized in that** the profile (1 - 4) has a relative profile thickness of more than 49 %, in particular more than 55 % or equal to 55 %, wherein the location of maximum thickness is less than 35 %.

13. The rotor blade (5) according to any one of the claims 1 to 12, **characterized in that** the relative profile thickness is greater than 65 %, in particular greater than, or equal to, 70 %.

14. The rotor blade (5) according to any one of the claims 1 to 13, **characterized in that** a nose radius is provided which is greater than 18 % of the profile depth, wherein the profile (1 - 4) is asymmetrical in the nose region.

15. The rotor blade (5) according to any one of the claims 1 to 12, **characterized in that** the suction side (7) and the pressure side (8) of the profile (1 - 4) each have a concave contour in the rear region, at least in sections.

## Revendications

1. Pale de rotor (5) d'une éolienne avec un profil (1 - 4), qui présente un côté supérieur (côté aspiration) (7) et un côté inférieur (côté pression) (8), dans laquelle le profil (1 - 4) comprend un squelette (21, 25) et une corde (18) entre le bord d'attaque (10) et le bord de fuite (11) du profil (1 - 4), dans lequel le profil (1 - 4) présente une épaisseur de profil relative supérieure à 45 %, dans lequel au moins un générateur vortex (50, 50', 50'', 50''') est disposé dans la zone du profil (1 - 4) sur le côté aspiration (7) de la pale de rotor (5), dans lequel le profil (1 - 4) est pourvu d'un bord de fuite émoussé, dans lequel l'épaisseur de bord de fuite est comprise entre 15 % et 70 % de la longueur de corde, **caractérisée en ce que** l'au moins un générateur vortex (50 - 50''') est disposé dans une plage allant de 20 % à 28 % d'une profondeur de profil relative du profil (1 - 4) .

2. Pale de rotor (5) selon la revendication 1, **caractérisée en ce que** le squelette (21, 25) s'étend au moins par endroits sous la corde (18) en direction du côté pression (8).

3. Pale de rotor (5) selon la revendication 1 ou 2, **caractérisée en ce que** l'au moins un générateur vortex (50 - 50''') comprend une paire d'ailettes (51), dans laquelle en particulier les ailettes (52, 53) sont disposées les unes par rapport aux autres selon un angle, qui se situe dans une plage allant de 10° à 50°, en particulier de 20° à 40°, en particulier de l'ordre de 30°.

4. Pale de rotor (5) selon l'une quelconque des revendications 1 à 3, **caractérisée en ce que** l'au moins un générateur vortex (50 - 50''') est disposé dans la zone (13) proche du moyeu de la pale de rotor (5).

5. Pale de rotor (5) selon l'une quelconque des revendications 1 à 4, **caractérisée en ce que** l'au moins un générateur vortex (50 - 50''') a au maximum une hauteur, qui correspond à la hauteur d'une couche limite d'air se formant lors du fonctionnement de la pale de rotor (5) sur le côté aspiration (7) de la pale de rotor (5), dans laquelle la couche limite d'air est définie **en ce que** la vitesse d'air dans la couche limite d'air est réduite par frottement au niveau de la surface de pale de rotor du côté aspiration (7) d'au moins 1 %.

6. Pale de rotor (5) selon l'une quelconque des revendications 1 à 5, **caractérisée en ce que** plusieurs générateurs vortex (50 - 50''') sont prévus, qui sont disposés les uns à côté des autres sensiblement de manière parallèle par rapport à un axe longitudinal de la pale de rotor (5) .

7. Pale de rotor (5) selon la revendication 6, **caractérisée en ce que** plusieurs générateurs vortex (50 - 50'''), en particulier tous les générateurs vortex (50 - 50'''), sont disposés, vus depuis le bord de fuite (10), à une profondeur de profil relative de 20 % à 40 %.

8. Pale de rotor (5) selon l'une quelconque des revendications 1 à 7, **caractérisée en ce que** le squelette (21, 25) est disposé sous la corde dans une section entre 0 % à 60 % de la profondeur de profil du profil (1 - 4).

9. Pale de rotor (5) selon l'une quelconque des revendications 1 à 8, **caractérisée en ce que** le squelette (21, 25) est disposé en totalité sous la corde (18) dans une section entre 5 % à 50 %, en particulier 2 % à 60 %.

10. Pale de rotor (5) selon l'une quelconque des revendications 1 à 9, **caractérisée en ce que** la valeur du bombement maximal est inférieure à 1,5 %.

11. Pale de rotor (5) selon l'une quelconque des revendications 1 à 10, **caractérisée en ce que** la deuxième déviation du squelette (21, 25) (incurvation de squelette) allant de 10 % à 40 %, en particulier de 5 % à 50 %, en particulier de 2 % à 60 %, de la profondeur de profil est soit égale à 0 soit est positive.

12. Pale de rotor (5) selon l'une quelconque des revendications 1 à 11, **caractérisée en ce que** le profil (1 - 4) présente une épaisseur de profil relative supérieure à 49 %, en particulier supérieure à 55 % ou égale à 55 %, dans laquelle la position d'épaisseur maximale est inférieure à 35 %.

13. Pale de rotor (5) selon l'une quelconque des revendications 1 à 12, **caractérisée en ce que** l'épaisseur de profil relative est de l'ordre d'une valeur supérieure à 65 %, en particulier est supérieure ou égale à 70 %.

14. Pale de rotor (5) selon l'une quelconque des revendications 1 à 13, **caractérisée en ce qu'**un rayon de nez est prévu, qui est supérieur à 18 % de la profondeur de profil, dans laquelle le profil (1 - 4) est, dans la zone de nez, asymétrique.

15. Pale de rotor (5) selon l'une quelconque des revendications 1 à 12, **caractérisée en ce que** le côté aspiration (7) et le côté pression (8) du profil (1 - 4) présentent dans la zone arrière respectivement au moins par endroits un contour concave.
